(19) Europäisches Patentamt

European Patent Office

Office européen des brevets

(11) Numéro de publication: **0 425 332 A1**

## (12) DEMANDE DE BREVET EUROPEEN

(21) Numéro de dépôt: **90402801.6**

(22) Date de dépôt: **09.10.90**

(51) Int. Cl.⁵: **B60C 5/00**, B60C 7/02, B60B 5/02

(30) Priorité: **25.10.89 FR 8913973**

(43) Date de publication de la demande:
**02.05.91 Bulletin 91/18**

(84) Etats contractants désignés:
**BE DE ES GB IT NL**

(71) Demandeur: **HUTCHINSON S.A. une Société Anonyme dotée d'un Conseil de Surveillance et d'un Directoire
2, rue Balzac
F-75008 Paris(FR)**

(72) Inventeur: **Boni, Bernard
26, rue des Martyrs
F-95660 Champagne sur Oise(FR)**
Inventeur: **Pelletier, Bruno
13, Avenue des Acacias
F-60340 Villiers s/st Leu(FR)**
Inventeur: **Carpentier, Eric
3, Place de l'Europe
F-95660 Champagne Sur Oise(FR)**

(74) Mandataire: **Orès, Bernard et al
Cabinet ORES 6, Avenue de Messine
F-75008 Paris(FR)**

(54) **Dispositif de roue, rouleau, galet ou analogue.**

(57) Dispositif de roue, galet de roulement, rouleau, roulette ou analogue comportant une jante et un bandage plein.

La jante (13) dont est solidaire le bandage plein (12) est un matériau composite du type de ceux comportant des renforts (14) en mats de fibres longues noyés dans une matrice (15) du même matériau que celui constituant le bandage (12).

Application : Roues de chariot élévateurs et engins analogues.

FIG.1

EP 0 425 332 A1

L'invention a pour objet un dispositif de roue, rouleau, galet ou analogue et, plus précisément, un tel dispositif dont le bandage est "plein", c'est-à-dire est formé par un anneau de matière homogène par opposition, notamment, aux roues équipées de pneumatiques tubulaires avec ou sans chambre à air.

Dans certains dispositifs connus, le bandage plein en un matériau du type élastomère comme du caoutchouc, est solidaire d'une jante en matière synthétique, comme décrit par exemple dans FR-A-1 527 450. Dans d'autres dispositifs connus, le bandage plein est solidaire d'une armature métallique propre à être emmanchée à frettage sur un moyeu pour le montage sur un essieu dans le cas d'une roue de véhicule, ou sur un axe dans le cas d'un galet, ou sur un arbre dans le cas d'une roulette, etc ...

De tels dispositifs à bandage plein doivent satisfaire à des exigences nombreuses et parfois contradictoires comme celles de tenue mécanique, thermique, de souplesse, -en particulier dans le cas de roues de véhicules pour assurer la mobilité de ces derniers et le confort de leurs utilisateurs-, mais aussi de durée de vie, notamment en ce qui concerne la conservation au cours du temps de l'adhérence entre le bandage et la jante. En ce qui concerne ce dernier point, on a déjà proposé, par exemple dans FR-A-1 527 450 déjà cité, d'améliorer la liaison du bandage à la jante en injectant sous une pression élevée du caoutchouc dans un moule enfermant la jante en polyamide sur laquelle a été préalablement rapporté un liant. Dans le cas de dispositifs à jante ou armature métallique, la liaison du bandage à la jante est parfois améliorée en ménageant dans celle-ci des perforations formant des moyens d'accrochage "mécanique". Cette solution est cependant relativement compliquée et onéreuse de sorte qu'elle n'est pratiquement pas mise en oeuvre dans le domaine des véhicules, par exemple, où les impératifs de coût sont stricts, d'une part, mais où on cherche également, d'autre part, à diminuer le poids des bandages roulants et aussi à faciliter autant que faire se peut la maintenance, ce qui implique, entre autres choses, que les moyeux de roues ne soient pas endommagés lors du montage sur eux des jantes et du bandage qui leur est associé.

Etant donné, en outre, que les utilisateurs de rouleaux, galets de roulement, ou roues à bandage plein en caoutchouc ou polyuréthanne sont parfois à la merci d'une destruction irrémédiable du bandage par fusion de celui-ci en cas d'efforts mécaniques importants, le besoin existe dans le domaine des organes de roulement à bandage plein de disposer d'un tel organe qui ne présente pas les inconvénients rappelés ci-dessus des dispositifs connus.

C'est, par conséquent, un but de l'invention de fournir un tel dispositif de roue, galet, rouleau ou organe analogue qui, tout en présentant les mêmes avantages que les dispositifs connus eu égard à la souplesse du bandage, aux qualités de roulement, au confort procuré aux utilisateurs, ait cependant une résistance mécanique plus élevée que celle des dispositifs connus de même qu'une meilleure tenue en température en réponse à un échauffement interne lors de son utilisation.

C'est, aussi, un but de l'invention de fournir un tel dispositif qui, exploité dans des conditions semblables à celle des dispositifs connus, ait une durée de vie nettement supérieure à celle desdits dispositifs.

C'est, également, un but de l'invention de fournir un tel dispositif propre à supporter, à dimensions égales, des charges plus élevées que celles des dispositifs connus tout en étant d'un poids moindre.

C'est, encore, un but de l'invention de fournir un tel dispositif de faible coût dans lequel sont éliminées les difficultés rencontrées jusqu'à présent pour l'adhérence du bandage à la jante et qui, en outre, n'endommage pas le moyeu lors de l'emmanchement de la roue ou analogue sur celui-ci.

Ces buts sont atteints, dans un dispositif de roue, galet de roulement, rouleau, roulette ou analogue, comportant un bandage plein solidaire d'une jante à base de matière synthétique, par le fait que, selon l'invention, ladite jante est en un matériau composite du type de ceux comportant des renforts en mats de fibres longues noyés dans une matrice du même matériau que celui constituant le bandage.

Selon une autre caractéristique de l'invention, le mat de fibres longues est un mat de fibres de verre qui est prévu dans la jante suivant des couches superposées noyées dans la matrice en ce même matériau que celui constitutif du bandage.

Dans une forme de réalisation préférée, le bandage et la matrice enfermant les mats de fibres longues constituant la jante sont obtenus au cours d'une même phase de fabrication, par exemple lors de la polymérisation du matériau mis en oeuvre pour former le bandage et la matrice.

L'invention prévoit, de façon particulièrement avantageuse, que le matériau constitutif du bandage et de la matrice de la jante soit un matériau du type des TPE (thermoplastiques elastomères).

Dans une forme de réalisation particulièrement avantageuse, le matériau mis en oeuvre est du type Nylon 6 élastomérisé.

L'invention sera bien comprise par la description qui suit, faite à titre d'exemple et en référence au dessin annexé dans lequel :
- la figure 1 est une vue en coupe partielle, schématique, d'un dispositif selon l'invention ;
- la figure 2 est une vue, également très schématique, illustrant un procédé de fabrication d'un dispositif selon l'invention.

L'invention est illustrée, dans ce qui suit, en référence à une roue de véhicule, comme celles équipant des chariots élévateurs ou autres appareils de manutention du même type, étant bien entendu qu'aucun caractère limitatif ne doit être attaché à cet exemple, l'invention trouvant également application pour la réalisation de galets, rouleaux, roulettes, ...... ou organes analogues à bandage plein.

Dans une telle roue 10 le moyeu 11 est prévu pour coopérer avec un essieu, non représenté, d'axe A, qui est également celui de la roue, laquelle comprend un bandage plein 12 et, entre le bandage et le moyeu, une jante 13 pour le montage par emmanchement à frettage de ladite jante sur le moyeu.

Conformément à l'invention, la jante 13 est en un matériau composite, c'est-à-dire constitué par une pluralité de couches de mats 14 de fibres longues noyées dans une matrice 15 en le même matériau que celui du bandage.

Dans une forme de réalisation préférée, le matériau constitutif du bandage 12 et de la matrice 15 est du type des TPE (Thermoplastiques Elastomères).

Dans une reéalisation ayant conduit à des résultats très satisfaisants, ce matériau est un Nylon 6 élastomérisé et les mats 14 de fibres longues sont des mats de fibres de verre.

Dans un premier mode de fabrication d'un tel dispositif on produit d'abord la jante 13 par polymérisation du matériau constitutif de sa matrice dans un moule renfermant les couches superposées de mats de fibres longues et on solidarise ensuite ladite jante au bandage plein 12.

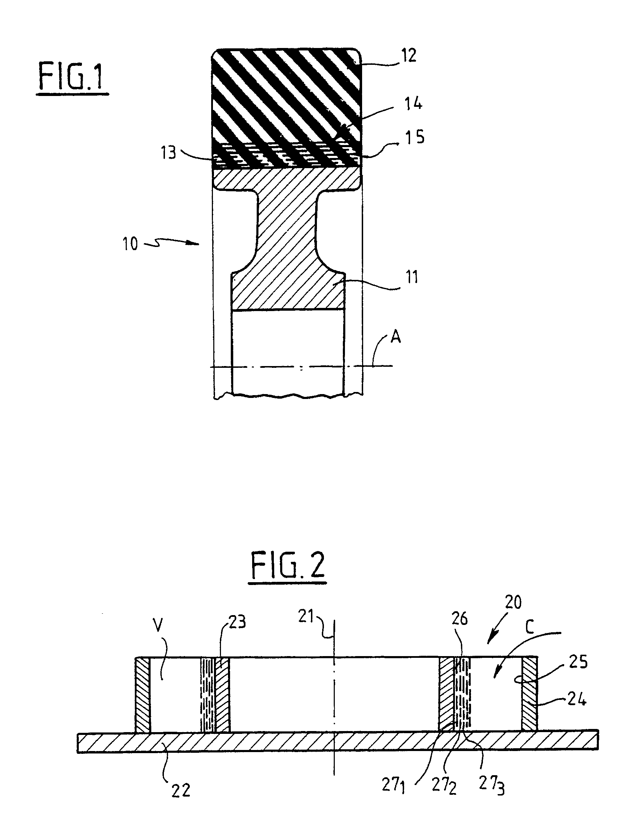

Dans un second mode de fabrication préféré, cependant, le dispositif est réalisé en une seule étape et à l'aide d'un appareillage comprenant un moule 20, figure 2, d'axe vertical 21 reposant sur une table 22 et qui comporte un cylindre intérieur ou noyau 23 et un cylindre extérieur 24, ce dernier définissant par sa face interne 25 le diamètre externe de la roue à fabriquer, tandis que la face externe 26 du noyau 23 définit le diamètre interne de la jante.

Conformément à l'invention, sur cette surface externe 26 est d'abord enroulé suivant plusieurs plis ou couches $27_1$, $27_2$, $27_3$? ETC... une bande d'un mat de fibres longues, avantageusement un mat de fibres de verre, cette opération étant suivie du remplissage en un matériau polymérisable et par coulée, -comme montré par la flèche C-, du volume V intérieur au cylindre 24. Le moule 20, ainsi garni de matériau polymérisable auquel ont été ajoutés les ingrédients usuels, comme des catalyseurs, ect... est alors porté pendant le temps requis à la température appropriée.

Après démoulage, la partie la plus externe donne le bandage plein 12 de la roue et la partie interne la jante 13 à structure de matériau composite.

La jante, coulée d'une pièce avec le bandage, adhère parfaitement à ce dernier et permet le montage de la roue à emmanchement sur le moyeu 11 sans abimer ce dernier.

Complémentairement, le poids de la roue est considérablement réduit par rapport à celui d'une roue habituelle à bandage plein solidarisé sur une jante métallique dans laquelle, en outre, le bandage ne peut pas être réalisé en un matériau du type TPE en raison de l'impossibilité pratique de faire adhérer un tel matériau sur du métal.

EXEMPLE.

Une roue à bandage plein de dimensions 285 x 100 x 200 a été fabriquée par enroulement sur un noyau de 10 épaisseurs de mats de fibres de verre d'un poids de 500 g/m (comme vendu par la société OWENS CORNING FRANCE) pour former les renforts de la jante dont la matrice et le bandage ont été réalisés par coulée d'un Nylon 6 élastomérisé, polymérisé à 140°C pendant 10 mn.

On obtient ainsi une roue dont le poids, de l'ordre de 1,4 kg, est nettement inférieur à celui des roues usuelles de mêmes dimensions (2,6 kg) et dont les essais au banc montrent qu'elle a une durée de vie de deux à trois fois supérieure à celle d'une roue usuelle, cette durée de vie étant mesurée du début des essais jusqu'à ce que le bandage périsse par fusion.

On constate, en outre, qu'une roue selon l'invention présente par rapport à une roue correspondante à jante métallique et à bandage de polyuréthanne de même diamètre une résistance mécanique plus élevée, une meilleure tenue en température et une possibilité de supporter des charges plus élevées.

**Revendications**

1. Dispositif de roue, galet de roulement, rouleau, roulette ou analogue comportant un bandage plein solidaire d'une jante à base de matière synthétique, caractérisé en ce que ladite jante (13) est en un matériau composite du type de ceux comportant des renforts (14) en mats de fibres longues noyés dans une matrice (15) du même matériau que celui constituant le bandage (12).

2. Dispositif selon la revendication 1, caractérisé en ce que le mat de fibres longues est un mat de fibres de verre qui est prévu dans la jante (13) suivant des couches (14) superposées noyées dans la matrice (15) en le même matériau que celui constitutif du bandage (12).

3. Dispositif selon la revendication 1 ou 2, caractérisé en ce que le bandage et la matrice en fermant les mats de fibres longues constituant la jante sont obtenus au cours d'une même phase de fabrication, par exemple lors de la polymérisation du matériau mis en oeuvre pour former le bandage et la matrice.

4. Dispositif selon l'une quelconque des revendications précédentes, caractérisé en ce que le matériau constitutif du bandage et de la matrice de la jante est un matériau du type des TPE (Thermoplastiques Elastomères).

5. Dispositif selon la revendication 4, caractérisé en ce que ledit matériau est du type Nylon 6 élastomérisé.

FIG.1

10

12
14
15
13
11
A

FIG.2

V
23
21
26
20
C
25
24
22
27₁
27₂
27₃

Office européen
des brevets

Numéro de la demande

RAPPORT DE RECHERCHE
EUROPEENNE

EP 90 40 2801

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-3 977 453  (A. CORAN) <br> * Colonne 2, ligne 31 - colonne 3, ligne 7; colonne 3, lignes 45-65 * | 1-4 | B 60 C 5/00 <br> B 60 C 7/02 <br> B 60 B 5/02 |
| | - - - | | |
| X | CH-A-4 017 05  (H.M. TIXIER) <br> * Page 1, lignes 42-67; page 2, lignes 22-32 * | 1,2,4,5 | |
| | - - - | | |
| A | FR-A-1 527 450  (HUFA-ROLLEN) | | |
| | - - - - - | | |

DOMAINES TECHNIQUES
RECHERCHES (Int. Cl.5)

B 60 C
B 60 B

Le présent rapport de recherche a été établi pour toutes les revendications

| Lieu de la recherche | Date d'achèvement de la recherche | Examinateur |
|---|---|---|
| La Haye | 14 décembre 90 | SCHMITT L.P. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
--------------------------------------
& : membre de la même famille, document correspondant